# EUROPEAN PATENT APPLICATION

(11) **EP 1 221 657 A2**
(43) Date of publication of application: **10.07.2002**
(21) Application number: 02000111.1
(22) Date of filing: 03.01.2002
(51) Int. Cl.: G06F 17/21

(54) **Method and apparatus for rich text document storage on small devices**

(30) Priority: 03.01.2001 US 756641
(71) Applicant: SUN MICROSYSTEMS, INC., Palo Alto, California 94303 (US)
(72) Inventor: Proulx, David J., San Jose, CA 95112 (US); Arora, Akhil K., San Jose, CA 95129 (US); Rank, Paul J., San Jose, CA 95124 (US); Mak, Mingchi Stephen, Belmont, CA 94002 (US); Ong, Herbert T., Cupertino, CA 95014 (US)
(74) Representative: HOFFMANN - EITLE

(57) **Abstract**

The present invention provides a method and apparatus for rich text document storage on small devices. One embodiment provides a compact word processing document format. The document format allows viewing and editing of a document on PDAs. In one embodiment, the document format also includes style information. In another embodiment, the document format handles multi-byte characters. Yet another embodiment is designed to utilize a record-based storage system. One embodiment stores two style galleries in one record of a document. One style gallery represents style information for paragraphs. The order style gallery represents style information for smaller text runs (where a run is sequence of text of one style). The rest of the document stores the text of the document and information about applying styles from the galleries to the text. Documents in standard word processing formats are converted to the document format of the embodiment with little or no loss in stylistic information. One embodiment is designed to function on Palm PDAs. Other embodiments are designed to function on other types of PDAs.

## Description

### BACKGROUND OF THE INVENTION

### FIELD OF THE INVENTION

The present invention relates to the field of computer software, and in particular to a method and apparatus for rich text document storage on small devices.

Sun, Sun Microsystems, the Sun logo, Solaris and all Java-based trademarks and logos are trademarks or registered trademarks of Sun Microsystems, Inc. in the United States and other countries. All SPARC trademarks are used under license and are trademarks of SPARC International, Inc. in the United States and other countries. Products bearing SPARC trademarks are based upon an architecture developed by Sun Microsystems, Inc.

### BACKGROUND ART

Personal Digital Assistants (PDAs) are small hand-held computers that perform numerous tasks and functions. PDAs are versatile devices that users carry and operate almost anywhere. PDAs possess a smaller amount of memory and storage space than is typically found in desktop general purpose computer systems. Thus, word processing documents may require more memory than is available on a PDA. This problem can be better understood with a review of PDAs.

### PDAS

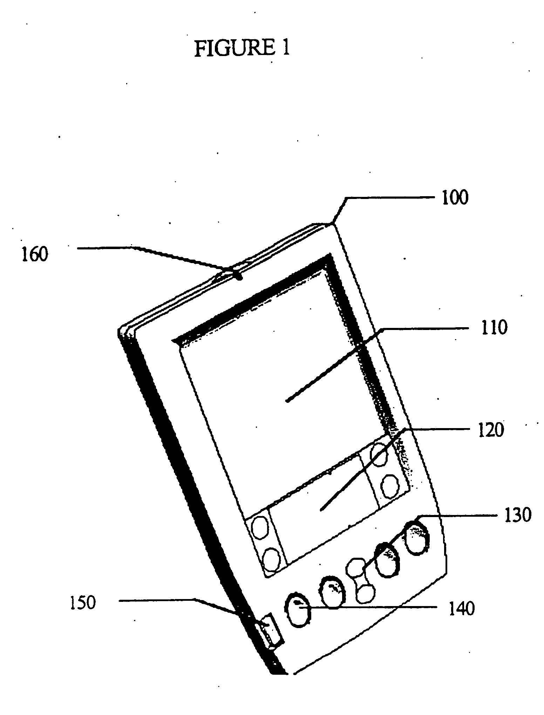

A PDA is a small computer-like device, usually no larger than the palm of a human hand, which typically has a base housing with an input mechanism mounted on its topside, and a miniature display screen for output. Figure 1 is an illustration of one embodiment of a personal digital assistant. The PDA (100) shown in Figure 1 is manufactured by 3Com and is called a Palm™. However, it will be apparent to one with ordinary skill in the art that the present invention can be used with any suitable word processing software application on any suitable small device computer system. The PDA has a base housing (160) with input mechanisms mounted on its topside, and a miniature display screen (110) for output. The base housing of the PDA contains a small microprocessor, data storage and memory areas, a storage battery, and other various miniature electronic components. The electronic components and other features vary depending on the model, make, and manufacturer of the PDA. The PDA is activated and de-activated by accessing the power button (150).

PDA output may take the form of either graphic and/or textual images presented to users on the miniature display screen, or may be presented to users in the form of sound. Additionally, some PDAs can package information for output through cable or wireless networks. Thus, data is transmitted to a general purpose computer. Likewise, data transfers from general purpose computers to PDAs via the same mechanism.

The input mechanism may be, for example, a miniature keyboard (not shown). Alternatively, the miniature display screen may act as both an input and output mechanism. When used as an input mechanism, the user inputs the data via a pen-like stylus or other writing implement (not shown) directly on the display screen. This could take the form of handwriting, or highlighting certain specific areas on the display screen such as buttons, icons, or captions. With reference to Figure 1, the bottom portion (120) of the display screen is where the user would input using the pen-like stylus. Additional mechanisms for user input include a scroll button (130) and four application buttons (140).

PDAs also contain an operating system, which is different from ones available for a general purpose desktop computer. PDAs also contain pre-loaded programs, such as word processing, spreadsheet, e-mail, and other related applications. The increasing popularity of PDAs stem from their relatively low cost and extreme portability compared to, for example, much larger desktop general purpose desktop or laptop computers. Their popularity also stems from the fact that they can communicate with most popular desktop applications like spreadsheet programs, word processing programs and e-mail. Thus, transfer of data between PDAs and general purpose desktop computers is convenient and useful. Many users find that for simple computing tasks during trips and other periods of being away from their larger computers, PDAs suffice, and the computing power of even a compact notebook computer is not necessary.

### PDA DATA TRANSFERS

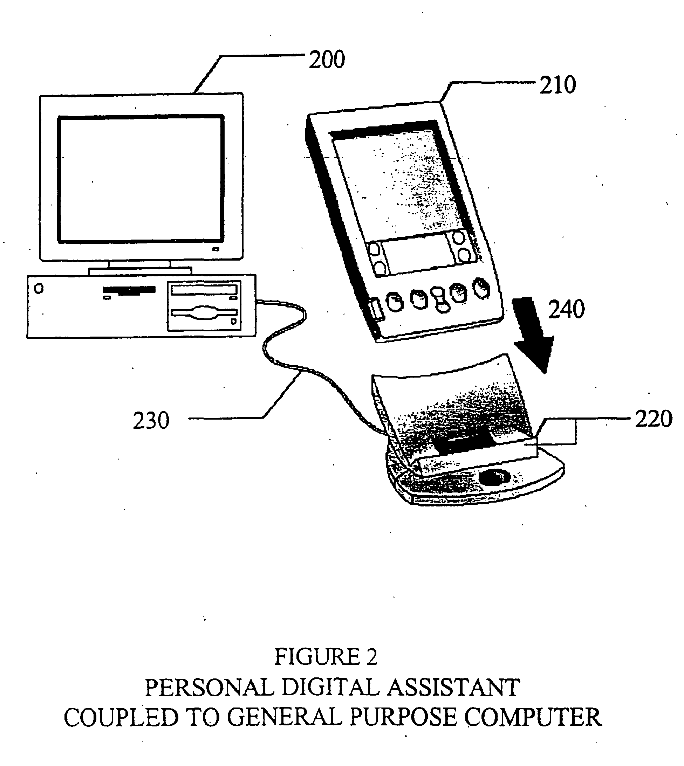

A conventional means of transferring data is by way of a conduit. Figure 2 illustrates one mechanism by which a user transfers data from a desktop CPU (200) to a PDA (210), or vice versa. The desktop CPU couples to the PDA carriage (220) via a connecting line (230).

The connecting line provides a two-way data communication coupling via a desktop CPU to a PDA. Although, the connecting line represents a cable connection, it will be apparent to one skilled in the art, that the present invention may be practiced with numerous types of connections. For example, if the connecting line is an integrated services digital network (ISDN) card or a modem, the connecting line provides a data communication connection to the corresponding type of telephone line. Additionally, wireless links are available to the present invention. In any such implementation, the connecting line sends and receives electrical, electromagnetic or optical signals, which carry digital data streams representing various types of information. In some implementations, computer software, termed "conduits," control the transmission of data streams through the connecting line.

In operation, a user would insert the PDA into the carriage in the direction generally indicated by the black arrow (240). Thereafter, data is passed bi-directionally across the conduit to achieve the result of transferring data between a PDA and a desktop general purpose computer.

### PDA MEMORY AND STORAGE

Due to size limitations, PDAs have less memory and storage space than desktop general purpose computers. Thus, conservation of memory and storage space is a main concern when designing programs and documents for use on PDAs. If programs are too large, they may consume all the memory or storage space resources of a PDA. If a memory intensive program consumes all the memory of a PDA when running, a user is restricted from running any other program while the memory intensive program runs. Additionally, if a program consumes all the storage space of a PDA, the user is restricted from having any other programs on the PDA. Thus, large programs limit the versatility of PDAs.

Documents associated with programs present an additional drain on memory and storage space resources. If one or more documents are large, they consume enough memory and storage space to limit the versatility of PDAs. Additionally, documents are frequently transmitted between PDAs and desktop general purpose computers, and such transmissions sometimes occur over expensive wireless networks. Thus, larger documents increase the cost in time and money for transmissions. Thus, it is important to represent the information in a document compactly since compact documents consume less memory and storage space.

### RECORD BASED STORAGE

General purpose computers utilize a file system to store and locate information. File size varies in file system. Some PDAs do not have a file system. Instead, the PDAs utilize a record-based storage system. A record is similar to a file, but records in a record-based storage system are often limited in size. However, the amount of data to be stored is frequently larger than the record size. If the amount of data is larger than the record size, more than one record is used to store the data. Thus, documents and programs are stored in one or more records on a PDA using a record-based storage system.

### WORD PROCESSING DOCUMENTS

Word processing documents contain two types of information: text and stylistic information. The text is a collection of alphanumeric symbols used to represent the information of the document (e.g., a letter, a book or a column). The stylistic information is a collection of instructions which dictate how the text is displayed. For example, stylistic information includes instructions on fonts, underlining, bold face, italics and line spacing.

Many formats exist for word processing documents. One format is termed "text." A text format document contains only the text portion of the word processing document. Thus, a text format document contains no stylistic information. The text format is compact; however, users frequently wish to add stylistic components to their word processing documents. If a word processing document with stylistic information is converted into a text format document, the stylistic information is lost. As a result, the text format is insufficient for the needs of PDA users who wish to incorporate stylistic information in word processing documents.

A rich text format is a format for word processing documents which includes stylistic information. One rich text format commonly used with PDA is termed the "doc" format. However, the stylistic options of the doc format are limited. Additionally, the doc format fails to handle multi-byte characters. Some languages require multi-byte characters for their representation. Thus, the format is not completely internationalizable.

### CONVERSION OF FORMATS

One method of addressing the problem of word processing document size on PDAs is to convert standard word processing documents (e.g., a Microsoft Word document or WordPerfect document) to the doc format or other similar rich text format. However, the conversion of a standard word processing document to the doc format results in significant loss of stylistic information of the original document. Thus, if the document is transmitted to a general purpose desktop computer and converted back to the original format, the document appears significantly different.

### XML

The Extensible Markup Language (XML) is a computer language used to create common information formats. XML uses tags (markup symbols) to indicate what the tagged data represents. For example, a data item representing a phone number is tagged with a "phone number" tag. XML also allows for templates to control how tagged data is displayed.

Additionally, XML is extensible, which means that the tags are unlimited and self-defining.

### STYLE GALLERIES

Some word processing programs allow users to set multiple style settings simultaneously by selecting a member of a style gallery. Each member of a style gallery is associated with a set of style information. For example, a style gallery member associated with the name "Heading 1" might represent a font style of Times New Roman, a font size of 16, bold facing and right justification.

### SUMMARY OF THE INVENTION

It is thus an object of the invention to provide for storage of documents on a small device with improved compactness.

This object of the invention is solved by a method for compactly storing a word processing document comprising: storing a set of styles associated with the word processing document; storing a set of text information associated with the word processing document; and storing a set of linking information that links the set of text information and the set of styles. These storage of styles and the text information and providing linking information, a particularly compact storage of word processing documents can be provided.

Advantageously, the set of styles may be divided into a first gallery and a second gallery. The first gallery may be a set of paragraph styles and the second gallery may be a set of text styles.

The set of styles may be stored in a first record and the set of text information and the set of linking information may be stored in one or more second records.

Further, the step of storing these set of text information may comprise storing one or more characters of the set of text information in a multibyte format.

The object of the invention is further solved by a word processing document compactor comprising: a first storage medium configured to store a set of styles associated with a word processing document; a second storage mechanism configured to store a set of text information associated with the word processing documents; and a third storage mechanism configured to store a set of linking information that links the set of text information and the set of styles.

Moreover, the object of the invention is solved by a computer program product comprising: a computer usable medium having computer readable program code embodied therein, configured to compactly store a word processing document, the computer program product comprising: computer readable code configured to cause a computer to store a set of styles associated with the word processing document; computer readable code configured to cause a computer to store a set of text information associated with the word processing document; and computer readable code configured to cause a computer to store a set of linking information that links the set of text information and the set of styles.

The present invention provides a method and apparatus for rich text document storage on small devices. One embodiment provides a compact word processing document format. The document format allows viewing and editing of a document on PDAs. In one embodiment, the document format also includes style information. In another embodiment, the document format handles multi-byte characters. Yet another embodiment is designed to utilize a record-based storage system.

One embodiment stores two style galleries in one record of a document. One style gallery represents style information for paragraphs. The other style gallery represents style information for smaller text runs (where a run is sequence of text of one style). The rest of the document stores the text of the document and information about applying styles from the galleries to the text. Documents in standard word processing formats are converted to the document format of the embodiment with little or no loss in stylistic information.

One embodiment is designed to function on Palm PDAs. Other embodiments are designed to function on other types of PDAs.

### BRIEF DESCRIPTION OF THE DRAWINGS

These and other features, aspects and advantages of the present invention will become better understood with regard to the following description, appended claims and accompanying drawings where:
- Fig. 1: is a block diagram of a personal data assistant.
- Fig, 2: is a block diagram of a personal data assistant coupled to a desktop general purpose computer.
- Fig. 3: is a block diagram of a compact word processing document in accordance with one embodiment of the present invention.
- Fig. 4: is a block diagram of a compact word processing document in accordance with one embodiment of the present invention.
- Fig. 5: is a flow diagram of compactly storing a word processing document in accordance with one embodiment of the present invention.
- Fig. 6: is a block diagram of a style record of a compact word processing document in accordance with one embodiment of the present invention.
- Fig. 7: is a block diagram of position information in accordance with one embodiment of the present invention.
- Fig. 8: is a block diagram of bookmark information in accordance with one embodiment of the present invention.
- Fig. 9: is a block diagram of a paragraph style in accordance with one embodiment of the present invention.
- Fig. 10: is a block diagram of a text style in accordance with one embodiment of the present invention.
- Fig. 11: is a block diagram of a text record in accordance with one embodiment of the present invention.
- Fig. 12: is a block diagram of a run descriptor in accordance with one embodiment of the present invention.
- Fig. 13: is a flow diagram of the process of converting a word processing document from a standard format to a compact format in accordance with one embodiment of the present invention.
- Fig. 14: is a block diagram of a general purpose computer.

### DETAILED DESCRIPTION OF THE INVENTION

The invention is a method and apparatus for rich text document storage on small devices. In the following description, numerous specific details are set forth to provide a more thorough description of embodiments of the invention. It is apparent, however, to one skilled in the art, that the invention may be practiced without these specific details. In other instances, well known features have not been described in detail so as not to obscure the invention.

### STYLE STORAGE

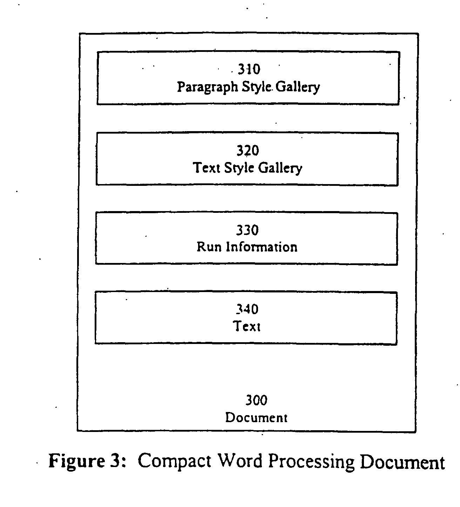

One embodiment uses style galleries to store stylistic information. Figure 3 illustrates a compact word processing document in accordance with one embodiment of the present invention. The document (300) is comprised of a paragraph style gallery (310), a text style gallery (320), run information (330) and text (340). The run information describes where the styles from the two style galleries are applied in the text.

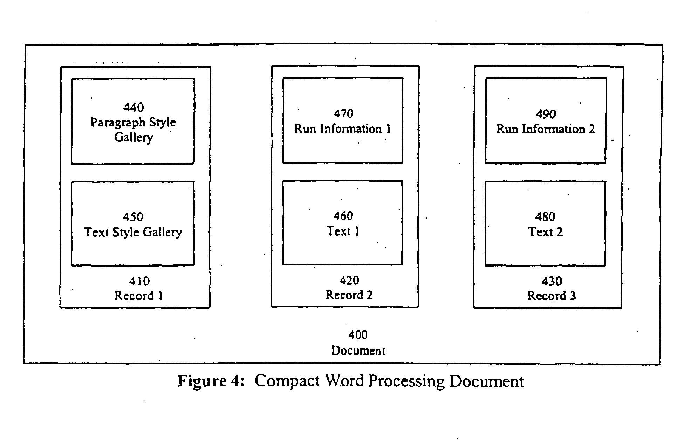

One embodiment places style galleries in a first record, which may be the first record of the document. This embodiment places text information and run information in subsequent records. Figure 4 illustrates a compact word processing document in accordance with one embodiment of the present invention. The document (400) is comprised of records 1 (410), 2 (420) and 3 (430). Record 1 contains a paragraph style gallery (440) and a text style gallery (450). Record 2 contains text 1 (460) and run information 1 (470). Run information 1 describes where the styles from the two style galleries are applied in text 1. Record 3 contains text 2 (480) and run information 2 (490). Run information 2 describes where the styles from the two style galleries are applied in text 2.

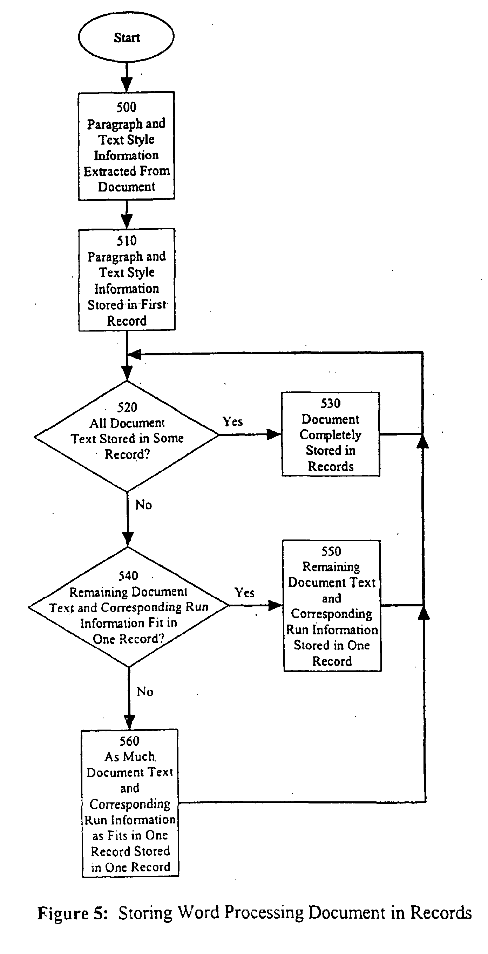

Figure 5 illustrates the process used to store a document as two or more records in accordance with one embodiment of the present invention. At step 500, paragraph and text style information is extracted from the document. At step 510, the paragraph and text style information is stored in a first record. At step 520, it is determined whether all document text is stored in some record. If all document text is stored in some record, at step 530, the document is completely stored in records.

If not all text is stored in some record, at step 540 it is determined whether the remaining document text and corresponding run information fits in one record. If the remaining document text and corresponding run information fits in one record, at step 550, the remaining document text and corresponding run information is stored in one record and the process repeats at step 520. If the remaining document text and corresponding run information does not fit in one record, at step 560, as much document text and corresponding run information as will fit in one record is stored in one record and the process repeats at step 520.

### STYLE RRECORD

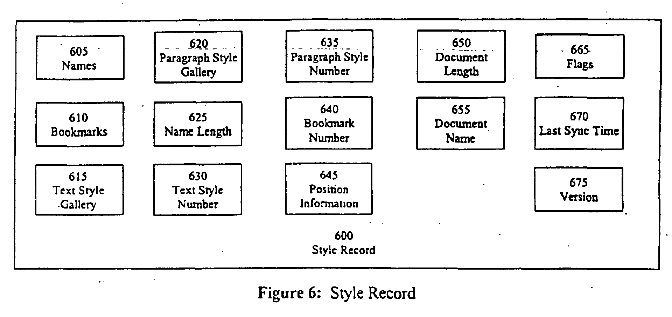

Figure 6 illustrates the first (style) record of a word processing document in accordance with one embodiment of the present invention. The style record (600) is comprised of names (605), bookmarks (610), a text style gallery (615), a paragraph style gallery (620), name length (625), a text style number (630), a paragraph style number (635), a bookmark number (640), position information (645), a document length (650), a document name (655), flags (665), a last sync time (670) and a version (675).

Names stores the names of styles, fonts and bookmarks. Bookmarks stores the bookmark information. Bookmark information is used to identify and retrieve specific locations in a document. Name length (625) stores the size of names (605). The text style number stores the number of different text styles in the text style gallery. The paragraph style number stores the number of different paragraph styles in the paragraph style gallery. The bookmark number stores the number of bookmarks in bookmarks (610). The position information allows the document to be opened to a specific position. The flags contain information such as whether the document is modified after an event. The version stores which version of this formatting style is in use by the document.

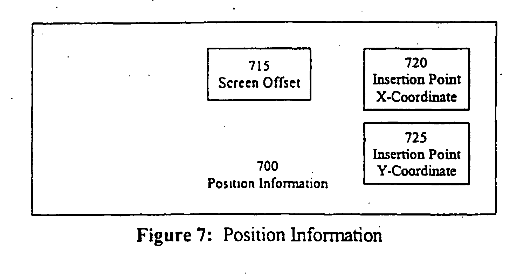

Figure 7 illustrates position information in accordance with the embodiment of Figure 6. The position information (700) is comprised of a screen offset (715), an insertion point x-coordinate (720) and an insertion point y-coordinate (725). The screen offset indicates the position of the top of the display screen in the document. The insertion point x and y coordinates indicate the location of the insertion point in the document. In one embodiment, if the insertion point x and y coordinates are both zero, there is no insertion point.

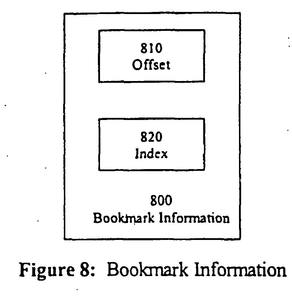

Figure 8 illustrates bookmark information in accordance with the embodiment of Figure 6. The bookmark information (800) is comprised of an offset (810) and an index (820). The offset indicates the location of the bookmark in the text. The index indicates the location of the bookmark name in the names portion of the style record.

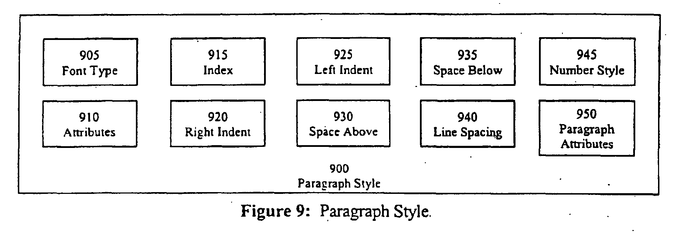

Figure 9 illustrates a paragraph style in accordance with the embodiment of Figure 6. The paragraph style (900) is comprised of a font type (905), text attributes (910), an index (915), a right indent (920), a left indent (925), a space above (930), a space below (935), a line spacing (940), number style (945) and paragraph attributes (950).

The font type represents information about the style of the font. One embodiment has seven font type options: nochange, textbody, bold, italic, heading1, heading2 and heading. The text attributes represent information about the style of the text. One embodiment has six text attribute options: bold, italic, underline, strikethrough, outline and shadow.

The index indicates the location of the paragraph style name in the names portion of the style record. In one embodiment, the right indent, left indent, space above and space below store the number of pixels for each. In one embodiment, the line spacing stores either the number of pixels or lines between lines of text. Whether the line spacing is in pixels or lines is indicated by one bit of the bits used to represent the line spacing.

The number style represents the style used with numbers used to numerate numbered lists. The number style is only used if the paragraph is an element of a numbered list. The paragraph attributes represent information about the paragraph style. One embodiment has seven paragraph style options: left align, right align, justified, centered, numbered, bulleted and list item.

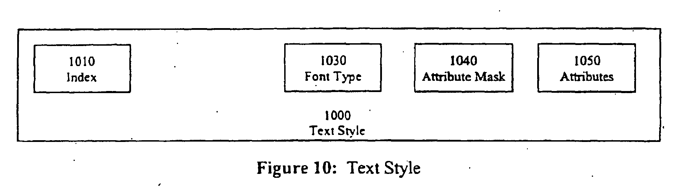

Figure 10 illustrates a text style in accordance with the embodiment of Figure 6. The text style (1000) is comprised of an index (1010), a font type (1030), an attribute mask (1040) and attributes (1050). The index indicates the location of the text style name in the names portion of the style record. The font type is the identifier of the font to use. The attributes represent information about the style of the text. One embodiment has six attribute options: bold, italic, underline, strikethrough, outline and shadow. The attribute mask indicate which portions of the attribute are in effect.

### TEXT RECORDS

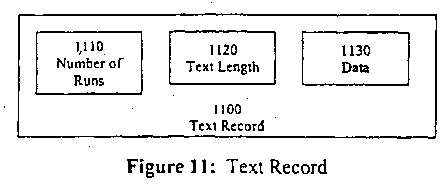

In one embodiment of the present invention, text and run information of word processing documents are stored in text records. Figure 11 illustrates a text record in accordance with one embodiment of the present invention. The text record (1100) is comprised of a number of runs (1110), a text length (1120) and data (1130). The number of runs represents the number of runs found in this record, and the text length is the length of the text in this record. The data represents the run descriptors and text of the record.

In one embodiment, the text is represented by multi-byte characters. In one embodiment, the text precedes the run descriptors in the data portion of the text record. In another embodiment, the run descriptors precedes the text in the data portion of the text record.

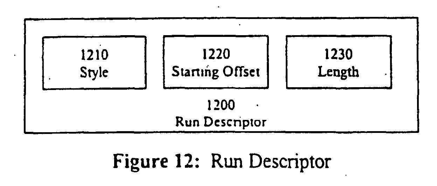

Figure 12 illustrates a run descriptor in accordance with the embodiment of Figure 11. The run descriptor (1200) is comprised of a style (1210), a starting offset (1220) and a length (1230). The style references one of the styles found in the style gallery. In one embodiment one bit of the style information indicates whether the style pertains to a paragraph style or a text style. The starting offset indicates the starting location of this run in the text of this text record. The length indicates the length of the text affected by this run.

Appendix A has a header file which describes programming structures in accordance with another embodiment of the present invention. The header file is in the C programming language, though the invention can be practiced in any suitable programming language.

### CONVERTING DOCUMENT FORMATS

Before transmitting a word processing document to or from a PDA, it is important to ensure the document is in a format in accordance with one embodiment of the present invention. Thus, the document is represented compactly and data transmissions are accomplished at a lower cost. If a document is not in a format in accordance with one embodiment of the present invention, the document must be converted to the desired format.

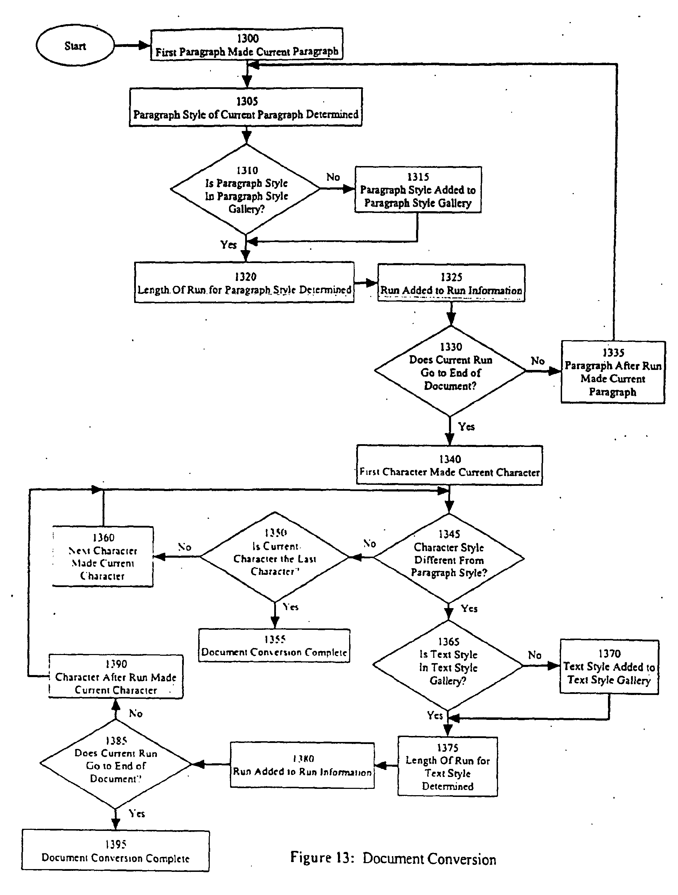

Figure 13 illustrates the process of converting a word processing document from a standard format to a compact format in accordance with one embodiment of the present invention. At step 1300, the first paragraph of the document is made the current document. At step 1305, the paragraph style of the current paragraph is determined. At step 1310, it is determined whether the paragraph style of the current paragraph is in the paragraph style gallery. If the paragraph style of the current paragraph is not in the paragraph style gallery, at step 1315, the paragraph style of the current paragraph is added to the paragraph style gallery and the process continues at step 1320. If the paragraph style of the current paragraph is in the paragraph style gallery, the process continues at step 1320.

At step 1320, the length of the run for the current paragraph style is determined. At step 1325, the run is added to the run information. At step 1330, it is determined whether the current run continues to the end of the document. If the current run does not continue to the end of the document, at step 1335, the first paragraph after the run is made the current paragraph and the process repeats at step 1305.

If at step 1330 the current run continues to the end of the document, at step 1340, the first character of the document is made the current character. At step 1345, it is determined whether the text style of the current character is different from the paragraph style of the paragraph containing the character. If the text style of the current character is not different from the paragraph style of the paragraph containing the character, at step 1350, it is determined whether the current character is the last character of the document. If the current character is the last character of the document, at step 1355, the document format conversion is complete. If the current character is not the last character of the document, at step 1360, the next character is made the current character and the process repeats at step 1345.

If at step 1345, the text style of the current character is different from the paragraph style of the paragraph containing the character, at step 1365, it is determined whether the text style of the character is in the text style gallery. If the text style of the current character is not in the text style gallery, at step 1370, the text style of the current character is added to the text style gallery and the process continues at step 1375. If the text style of the current character is in the text style gallery, the process continues at step 1375.

At step 1375, the length of the run for the current text style is determined. At step 1380, the run is added to the run information. At step 1385, it is determined whether the current run continues to the end of the document. If the current run does not continue to the end of the document, at step 1390, the first character after the run is made the current character and the process repeats at step 1345. If the current run continues to the end of the document, at step 1395, the format conversion is complete.

One embodiment excludes unnecessary style information from the document. Thus, only the styles necessary to display the text of the document as desired are included in the style record. One embodiment converts word processing documents from an XML format to a compact word processing document format.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment, a word processing document compactor comprises first storage means for storing a set of styles associated with a word processing document, second storage means for storing a set of text information associated with said word processing document, and third storage means for storing a set of linking information that links said set of text information and said set of styles. The set of styles may be divided into a first gallery and a second gallery, and the first gallery may be a set of paragraph styles and the second gallery may be a set of text styles.

The first storage means may further be configured to store said set of styles in a first record and the second storage means and the third storage means are further configured to store said set of text information and said linking information in one or more second records. One or more characters of said set of text information may be stored in a multi-byte format.

According to another embodiment, a computer program product may comprise: a computer usable medium having computer readable program code embodied therein configured to compactly store a word processing document, said computer program product comprising; computer readable code configured to cause a computer to store a set of styles associated with said word processing document; computer readable code configured to cause a computer to store a set of text information associated with said word processing document; and computer readable code configured to cause a computer to store a set of linking information that links said set of text information and said set of styles.

According to another embodiment, a program may be provided having instructions adapted to cause data processing means to carry out the operations of the above embodiments. Further, a computer readable medium may be provided in which the program is embodied.

### EMBODIMENT OF COMPUTER EXECUTION ENVIRONMENT (HARDWARE)

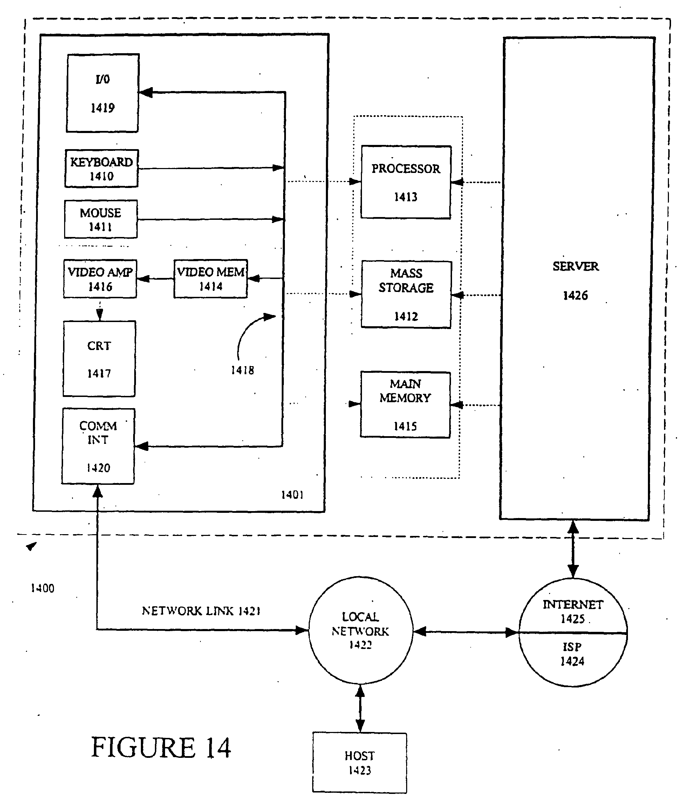

One or more embodiments of the present invention makes recording and/or viewing devices using a general purpose computing device as shown in Figure 14. A keyboard 1410 and mouse 1411 are coupled to a system bus 1418. The keyboard and mouse are for introducing user input to the computer system and communicating that user input to central processing unit (CPU) 1413. Other suitable input devices may be used in addition to, or in place of, the mouse 1411 and keyboard 1410. I/O (input/output) unit 1419 coupled to bi-directional system bus 1418 represents such I/O elements as a printer, A/V (audio/video) I/O, etc.

Computer 1401 may include a communication interface 1420 coupled to bus 1418. Communication interface 1420 provides a two-way data communication coupling via a network link 1421 to a local network 1422. For example, if communication interface 1420 is an integrated services digital network (ISDN) card or a modem, communication interface 1420 provides a data communication connection to the corresponding type of telephone line, which comprises part of network link 1421. If communication interface 1420 is a local area network (LAN) card, communication interface 1420 provides a data communication connection via network link 1421 to a compatible LAN. Wireless links are also possible. In any such implementation, communication interface 1420 sends and receives electrical, electromagnetic or optical signals which carry digital data streams representing various types of information.

Network link 1421 typically provides data communication through one or more networks to other data devices. For example, network link 1421 may provide a connection through local network 1422 to local server computer 1423 or to data equipment operated by ISP 1424. ISP 1424 in turn provides data communication services through the world wide packet data communication network now commonly referred to as the "Internet" 1425. Local network 1422 and Internet 1425 both use electrical, electromagnetic or optical signals which carry digital data streams. The signals through the various networks and the signals on network link 1421 and through communication interface 1420, which carry the digital data to and from computer 1400, are exemplary forms of carrier waves transporting the information.

Processor 1413 may reside wholly on client computer 1401 or wholly on server 1426 or processor 1413 may have its computational power distributed between computer 1401 and server 1426. Server 1426 symbolically is represented in Figure 14 as one unit, but server 1426 can also be distributed between multiple "tiers". In one embodiment, server 1426 comprises a middle and back tier where application logic executes in the middle tier and persistent data is obtained in the back tier. In the case where processor 1413 resides wholly on server 1426, the results of the computations performed by processor 1413 are transmitted to computer 1401 via Internet 1425, Internet Service Provider (ISP) 1424, local network 1422 and communication interface 1420. In this way, computer 1401 is able to display the results of the computation to a user in the form of output.

Computer 1401 includes a video memory 1414, main memory 1415 and mass storage 1412, all coupled to bi-directional system bus 1418 along with keyboard 1410, mouse 1411 and processor 1413. As with processor 1413, in various computing environments, main memory 1415 and mass storage 1412, can reside wholly on server 1426 or computer 1401, or they may be distributed between the two. Examples of systems where processor 1413, main memory 1415, and mass storage 1412 are distributed between computer 1401 and server 1426 include the thin-client computing architecture developed by Sun Microsystems, Inc., the Palm computing device and other personal digital assistants, Internet ready cellular phones and other Internet computing devices, and in platform independent computing environments, such as those which utilize the Java technologies also developed by Sun Microsystems, Inc.

The mass storage 1412 may include both fixed and removable media, such as magnetic, optical or magnetic optical storage systems or any other available mass storage technology. Bus 1418 may contain, for example, thirty-two address lines for addressing video memory 1414 or main memory 1415. The system bus 1418 also includes, for example, a 32-bit data bus for transferring data between and among the components, such as processor 1413, main memory 1415, video memory 1414 and mass storage 1412. Alternatively, multiplex data/address lines may be used instead of separate data and address lines.

In one embodiment of the invention, the processor 1413 is a SPARC microprocessor from Sun Microsystems, Inc., a microprocessor manufactured by Motorola, such as the 680X0 processor, or a microprocessor manufactured by Intel, such as the 80X86 or Pentium processor. However, any other suitable microprocessor or microcomputer may be utilized. Main memory 1415 is comprised of dynamic random access memory (DRAM). Video memory 1414 is a dual-ported video random access memory. One port of the video memory 1414 is coupled to video amplifier 1416. The video amplifier 1416 is used to drive the cathode ray tube (CRT) raster monitor 1417. Video amplifier 1416 is well known in the art and may be implemented by any suitable apparatus. This circuitry converts pixel data stored in video memory 1414 to a raster signal suitable for use by monitor 1417. Monitor 1417 is a type of monitor suitable for displaying graphic images.

Computer 1401 can send messages and receive data, including program code, through the network(s), network link 1421, and communication interface 1420. In the Internet example, remote server computer 1426 might transmit a requested code for an application program through Internet 1425, ISP 1424, local network 1422 and communication interface 1420. The received code may be executed by processor 1413 as it is received, and/or stored in mass storage 1412, or other non-volatile storage for later execution. In this manner, computer 1400 may obtain application code in the form of a carrier wave. Alternatively, remote server computer 1426 may execute applications using processor 1413, and utilize mass storage 1412, and/or video memory 1415. The results of the execution at server 1426 are then transmitted through Internet 1425, ISP 1424, local network 1422 and communication interface 1420. In this example, computer 1401 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Thus, a method and apparatus for rich text document storage on small devices is described in conjunction with one or more specific embodiments. The invention is defined by the following claims and their full scope an equivalents.

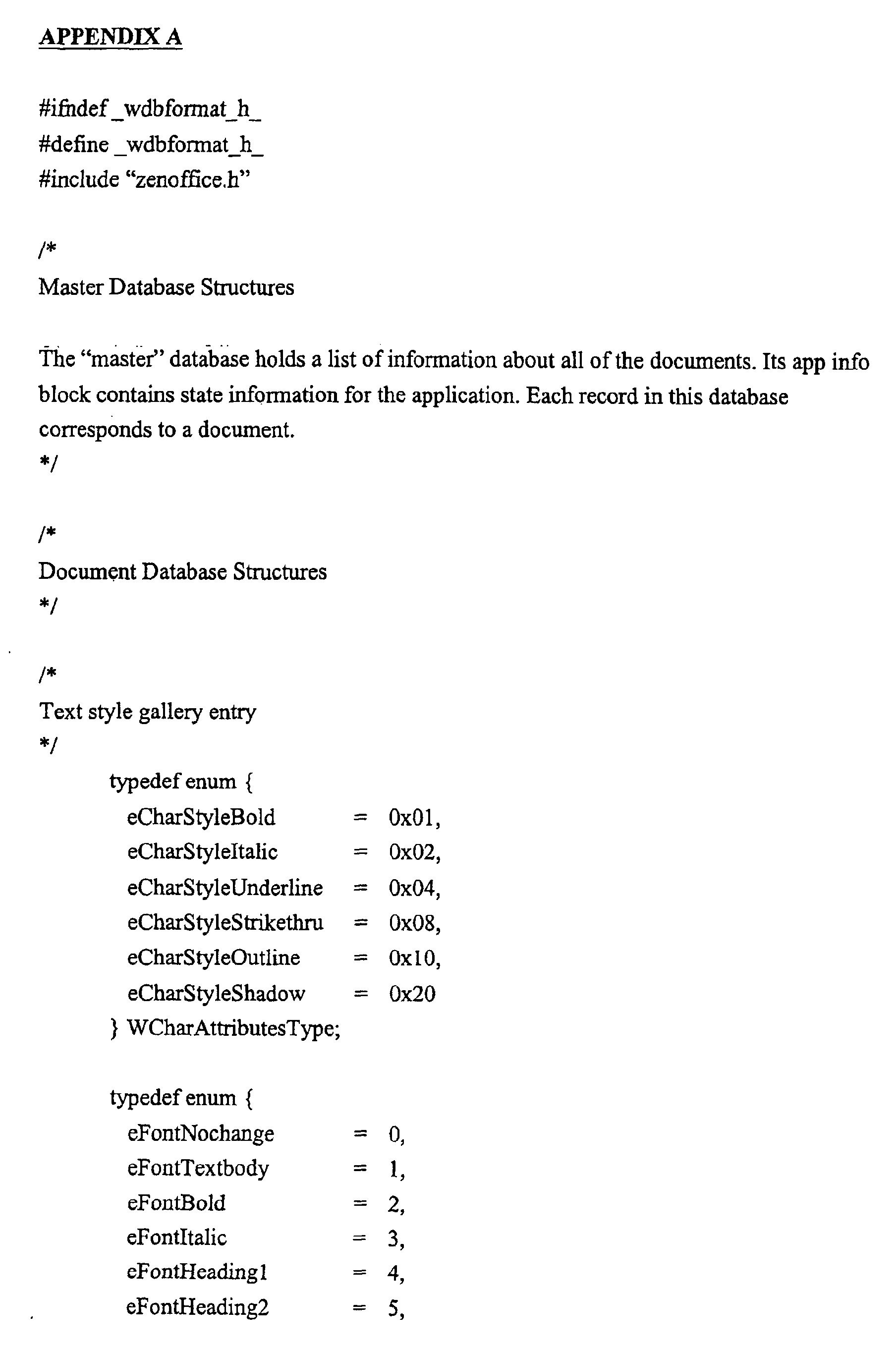

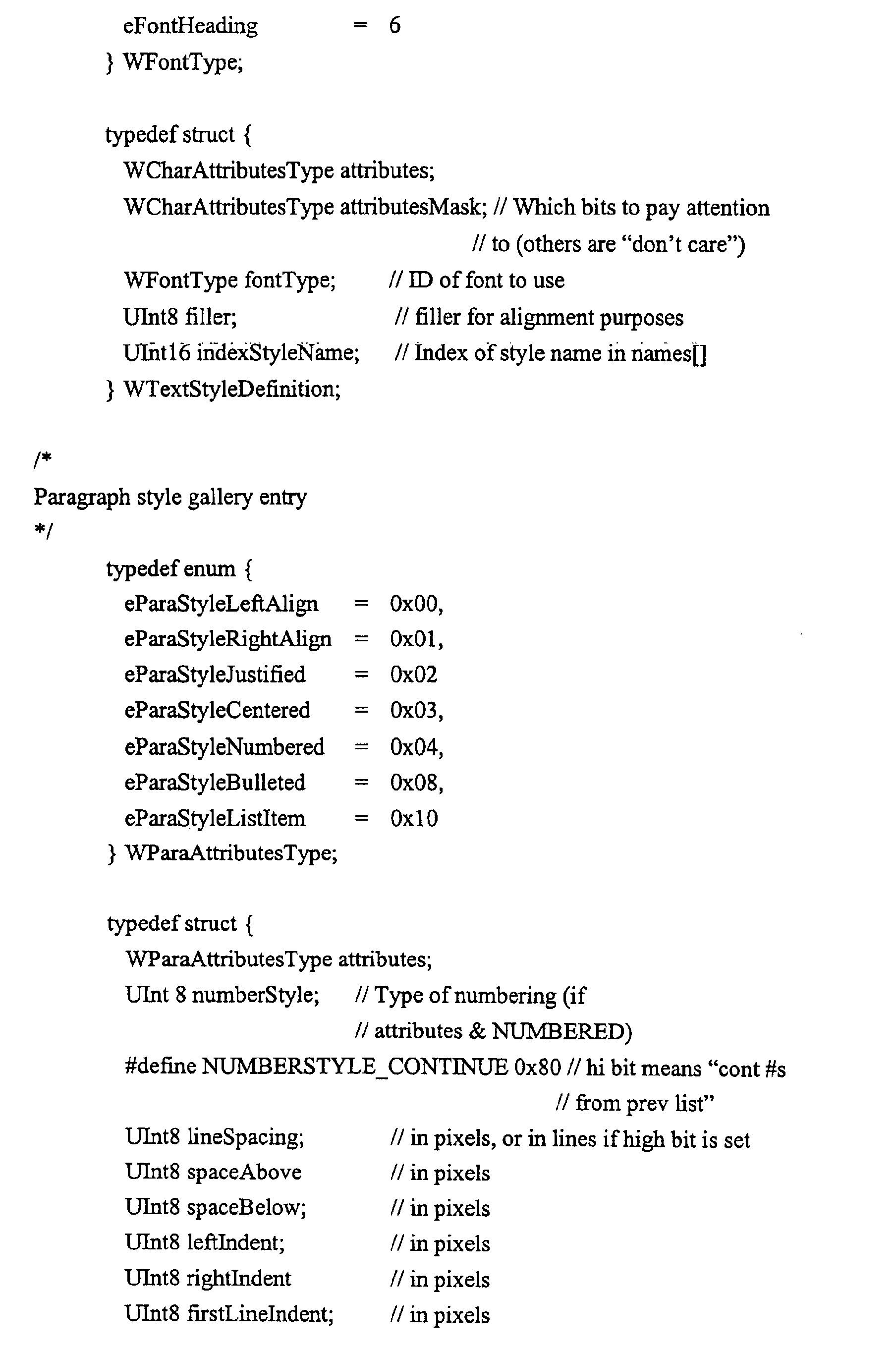

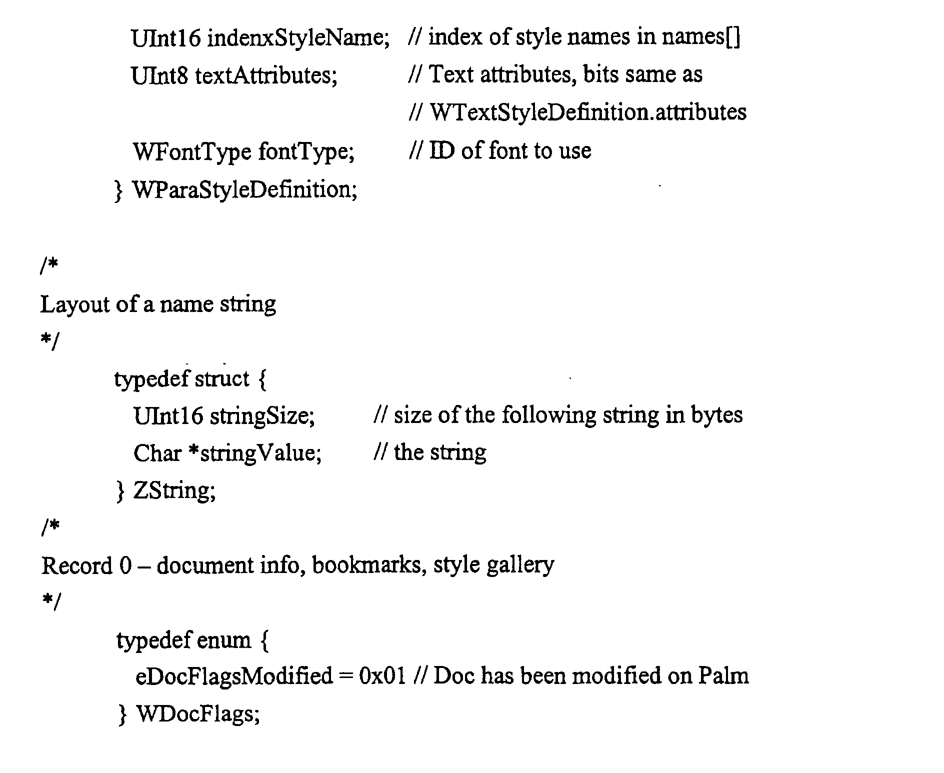

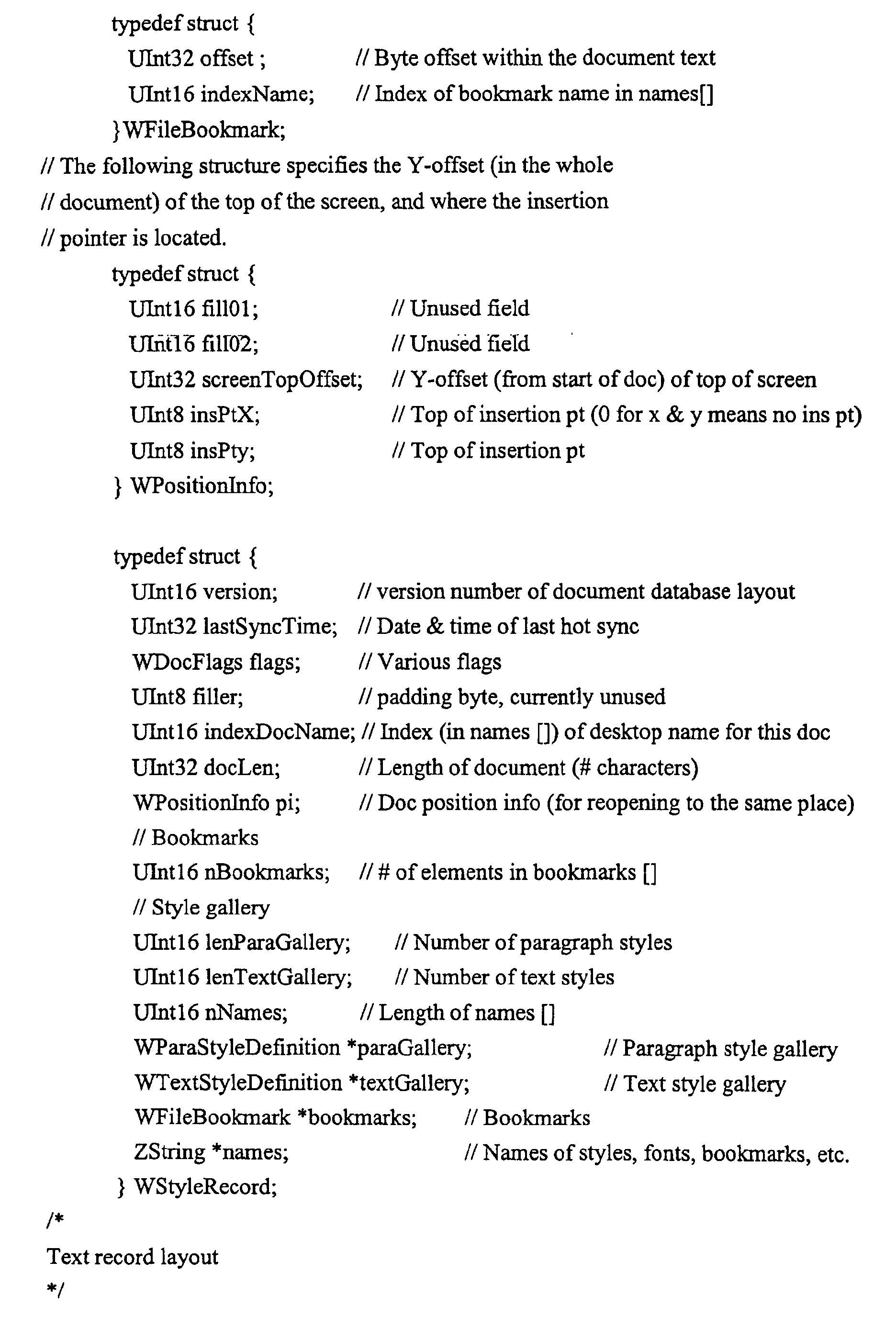

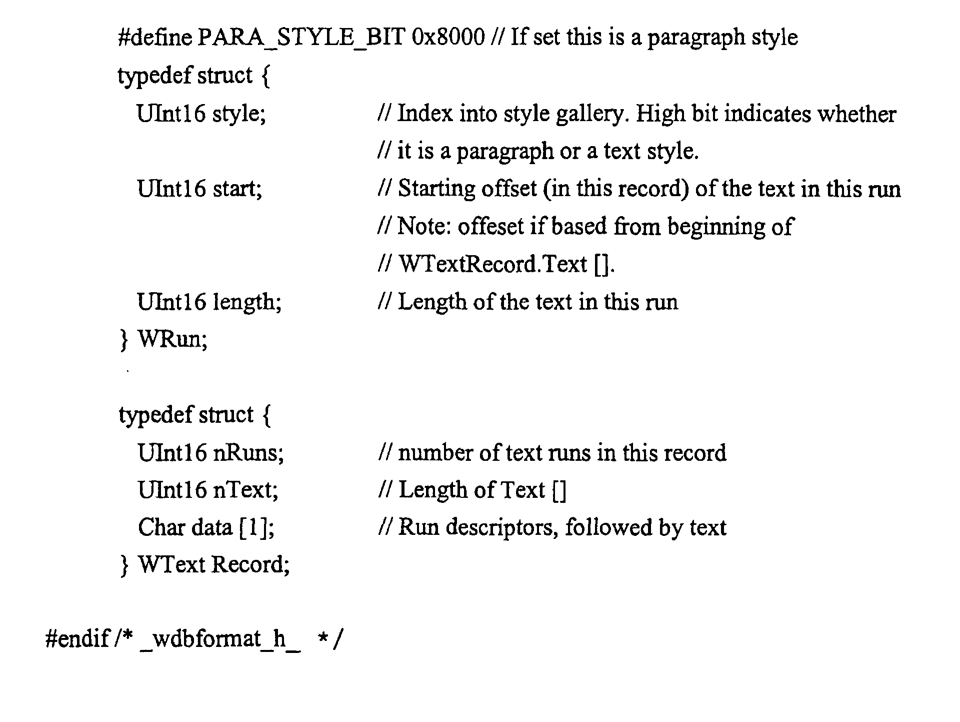

## Claims

1. A method for compactly storing a word processing document comprising:
storing a set of styles associated with said word processing document;
storing a set of text information associated with said word processing document;
storing a set of linking information that links said set of text information and said set of styles.

2. The method of claim 1 wherein said set of styles is divided into a first gallery and a second gallery.

3. The method of claim 2 wherein said first gallery is a set of paragraph styles.

4. The method of claim 2 wherein said second gallery is a set of text styles.

5. The method of claim 2 further comprising:
storing said set of styles in a first record.

6. The method of claim 2 further comprising:
storing said set of text information and said set of linking information in one or more second records.

7. The method of claim 2 wherein said step of storing said set of text information comprises:
storing one or more characters of said set of text information in a multi-byte format.

8. A word processing document compactor comprising:
a first storage mechanism configured to store a set of styles associated with a word processing document;
a second storage mechanism configured to store a set of text information associated with said word processing document; and
a third storage mechanism configured to store a set of linking information that links said set of text information and said set of styles.

9. The word processing document compactor of claim 8 wherein said set of styles is divided into a first gallery and a second gallery.

10. The word processing document compactor of claim 9 wherein said first gallery is a set of paragraph styles.

11. The word processing document compactor of claim 9 wherein said second gallery is a set of text styles.

12. The word processing document compactor of claim 9 wherein said first storage mechanism is further configured to store said set of styles in a first record.

13. The word processing document compactor of claim 9 wherein said second storage mechanism and said third storage mechanism are further configured to store said set of text information and said linking information in one or more second records.

14. The word processing document compactor of claim 9 wherein said second storage mechanism is further configured to store one or more characters of said set of text information in a multi-byte format.

15. A computer program product comprising:
a computer usable medium having computer readable program code embodied therein configured to compactly store a word processing document, said computer program product comprising:
computer readable code configured to cause a computer to store a set of styles associated with said word processing document;
computer readable code configured to cause a computer to store a set of text information associated with said word processing document; and
computer readable code configured to cause a computer to store a set of linking information that links said set of text information and said set of styles.

16. The computer program product of claim 15 wherein said set of styles is divided into a first gallery and a second gallery.

17. The computer program product of claim 16 wherein said first gallery is a set of paragraph styles.

18. The computer program product of claim 16 wherein said second gallery is a set of text styles.

19. The computer program product of claim 16 wherein said computer readable code configured to cause a computer to store said set of styles further comprises:
computer readable code configured to cause a computer to store said set of styles in a first record.

20. The computer program product of claim 16 wherein said computer readable code configured to cause a computer to compactly store further comprises:
computer readable code configured to cause a computer to store said set of text information and said linking information in one or more second records.

21. The computer program product of claim 16 wherein said computer readable code configured to cause a computer to store said text information further comprises:
computer readable code configured to cause a computer to store one or more characters of said set of text information in a multi-byte format.

22. A program having instructions adapted to make a computer carry out the method of at least one of the claims 1 - 7.

23. A computer readable medium, in which a program is embodied, where the program is to make a computer execute the method of at least one of the claims 1 - 7.
